(19) Europäisches Patentamt
European Patent Office
Office européen des brevets

(11) **EP 3 849 231 B1**

(12) **EUROPEAN PATENT SPECIFICATION**

(45) Date of publication and mention
of the grant of the patent:
**06.07.2022   Bulletin 2022/27**

(21) Application number: **20150718.3**

(22) Date of filing: **08.01.2020**

(51) International Patent Classification (IPC):
*H04W 24/02* (2009.01)     *H04L 41/0806* (2022.01)
*H04L 41/147* (2022.01)     *H04L 41/16* (2022.01)
*G06N 20/20* (2019.01)     *G06N 5/00* (2006.01)

(52) Cooperative Patent Classification (CPC):
**H04W 24/02; H04L 41/0806; H04L 41/147;
H04L 41/16;** G06N 5/003; G06N 20/20

(54) **CONFIGURATION OF A COMMUNICATION NETWORK**

KONFIGURATION EINES KOMMUNIKATIONSNETZWERKS

CONFIGURATION D'UN RÉSEAU DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.07.2021   Bulletin 2021/28**

(73) Proprietor: **Nokia Solutions and Networks Oy
02610 Espoo (FI)**

(72) Inventors:
• **TOURE, Maguette
91620 NOZAY (FR)**
• **LOPES VIEIRA, Dayanne
91620 NOZAY (FR)**
• **STAVRIANOU, Anna
91620 NOZAY (FR)**

(74) Representative: **Loyer & Abello
9, rue Anatole de la Forge
75017 Paris (FR)**

(56) References cited:
**EP-A1- 3 525 507        WO-A1-2019/120543
US-A1- 2019 068 443**

**Description**

**Field**

The disclosure relates to methods and apparatuses for determining a configuration for a communication network, and in particular to methods and apparatuses that employ machine learning techniques for determining a configuration for a communication network. Various example embodiments relate to a cellular network.

**Background**

One of the objectives of network engineers is to achieve a good performance for a communication network. The performance of the network depends on the network configuration. Therefore, being able to determine a configuration that improves the performance of the network is a current challenge for network engineers. Usually, such a configuration is determined in an empirical way. The network engineers, based on their experience and knowledge of performance indicators of the network, try to change the configuration parameters values, until the changes improve the values of the performance indicators. This is a time-consuming process that requires manual effort from the network engineers.

**Summary**

In some example embodiments, the disclosure provides an apparatus for determining a configuration for a communication network.

The apparatus for determining a configuration for a communication network may comprise at least one processor and at least one memory including computer program code. The at least one memory and the computer program code may be configured to, with the at least one processor, cause the apparatus to implement a machine learning model to predict a value of a performance indicator of the communication network. The machine learning model provided is configured to predict said value of a performance indicator based on a plurality of features, which include data related to configuration parameters of the communication network. The configuration parameters are parameters that can be modified through a management apparatus of the communication network. In some example embodiments, the at least one memory and the computer program code may be configured to, with the at least one processor, cause the apparatus to provide a machine learning model to predict values of a plurality of performance indicators of the communication network.

The at least one memory and computer program code may further be configured to, with the at least one processor, cause the apparatus to analyze the machine learning model to select at least one dominant feature among the features used for the prediction of the value of a performance indicator. A dominant feature is a feature that influences the prediction more than other features used for the prediction. This dominant feature consists in data related to configuration parameters, because the machine learning model provided predicts a value of a performance indicator based on data related to configuration parameters. The at least one memory and computer program, with the at least one processor, may further cause the apparatus to select at least one influential configuration parameter among the configuration parameters based on the dominant feature selected. The selection of at least one influential configuration parameter based on the dominant feature is possible because the feature is related to a configuration parameter.

The at least one memory and computer program code may further be configured to, with the at least one processor, cause the apparatus to determine a recommended value at least for the said influential configuration parameter or influential configuration parameters. The recommended value for the influential configuration parameter improves the predicted value of the performance indicator or the predicted values of the performance indicators if there is a plurality of performance indicators. In some example embodiments, the at least one memory and computer program code may further be configured to, with the at least one processor, cause the apparatus to select a dominant feature among the features used for the prediction with a machine learning method selected among the scikit-learn library. In some example embodiments, the at least one memory and the computer program code may be configured to, with the at least one processor, cause the apparatus to exploit the machine learning model to determine a recommended value for a plurality of configuration parameters.

Thanks to these features, the network can be easily configured so that its performance is improved. The configuration is easy to perform because a value is recommended for a configuration parameter in the network or several values are recommended for several configuration parameters in the network. The configuration parameters, by definition, are parameters whose values can be chosen by network managers. It is therefore very easy for network managers to configure the network, by applying to the configuration parameters the recommended values. Furthermore, the recommended value for a configuration parameter has a high probability to improve the value of the at least one performance indicator, because it is an influential parameter in the prediction, which means that if it changes, it is highly probable that the value of the performance indicator or the values of the performance indicators will change as well.

In some example embodiments, such apparatus may comprise one or more of the features below.

In an example embodiment, the data related to configuration parameters includes data selected in the group consisting of a time lag since a latest time a configuration parameter was changed, a latest different value of a configuration parameter, and a time lag since a latest time a configuration parameter had a different value.

In an example embodiment, the communication network is a cellular network. The configuration parameters are selected in the group consisting of a power offset of a communication protocol, a parameter related to handover, a parameter enabling the use of a protocol in the communication network, a value for an information used in a protocol, a maximum target for a total wide band power received in the cell with a protocol, a power allowed for transmission in a protocol, a value for a linear sum of power of channels in a cell of the cellular network, a control parameter of features of a protocol, a parameter related to a connection setup in the cellular network, a capacity for a traffic allowed for a protocol in a cell, a measurement control parameter set controlling inter-frequency measurements of a user of the network wherein the user of the network has a channel allocated, a code set for a channel.

In an example embodiment, the features further include data related to network characteristics, the said network characteristics reflecting the efficiency or the organization of the network at a given time. In some example embodiments, the data related to network characteristics includes data related to previous values of the performance indicators. The performance indicators related features may include the value of a performance indicator at a previous time, the last day a performance indicator had a value considered as not satisfying, or the last day a performance indicator had a value considered as satisfying. A threshold may be set to define the value of a performance indicator as satisfying if it exceeds that threshold, and to define it as unsatisfying otherwise. In some example embodiments, the performance indicators related features may also include counters. Given a predefined number of days $x$, with $2 \leq x \leq 30$, the counters can be chosen in a group consisting of the standard deviation of performance indicators for around $x$ days, counting for each day, the trend deviation of performance indicators for around $x$ days, counting per day, and the percentage of performance indicators that was good within the last $x$ days, counting per day.

In an example embodiment, the data related to network characteristics can also include data related to alarms in the network. Those alarms signal a malfunctioning of the network. The alarm-related features may include the number of occurrences that have happened per alarm within $x$ days or the last timelag an alarm has occurred within $x$ days, with $2 \leq x \leq 30$. In an embodiment, x is greater than 7 days.

In an example embodiment, the communication network is a cellular network and the data related to network characteristics also includes data related to neighboring cells of a cell in the cellular network. The data related to neighboring cells of a cell in the cellular network may include the number of neighboring cells of a cell in the cellular network or the distance of the nearest neighbors.

Thanks to those additional features, the at least one memory and the computer program code may be configured to, with the at least one processor, cause the apparatus to implement a machine learning model which predicts the values of performance indicators based on features including data related to configuration parameters of the communication network and data related to network characteristics. The data related to network characteristics makes the model more accurate. But the dominant features on which the machine learning model lies on are the data related to configuration parameters, in order to be able to recommend values for those configuration parameters.

In an example embodiment, the at least one memory and the computer program code may be configured to, with the at least one processor, cause the apparatus to implement a machine learning model configured to predict the performance indicator value as degraded or not degraded.

In an example embodiment, the at least one memory and computer program code may be configured to, with the at least one processor, cause the apparatus to implement a machine learning model configured to predict values for a plurality of performance indicators and to train the machine learning model with a multi-labeling classification method. In some example embodiments, the OneVSRestClassifier method from the scikit learn library is used, in order to fit one classifier per class. In some example embodiments, this method is used to classify the values of the performance indicators as degraded or not degraded.

Thanks to multi-labeling classification methods, the values of several performance indicators can be predicted at the same time.

In an example embodiment, the at least one memory and computer program code may further be configured to, with the at least one processor, cause the apparatus to exploit the machine learning model to determine a recommended value for a said configuration parameter, wherein exploiting the machine learning model comprises:

- selecting a configuration parameter to be tested
- selecting a plurality of values for the selected configuration parameter
- iterating a test for the selected configuration parameter until the test ends or all the plurality of values have been tested, wherein a said test includes:

    o selecting a first value for the configuration parameter among the plurality of values, wherein the first value has not been tested yet

o predicting a first value (45) for the performance indicator using the first value for the configuration parameter as input for the machine learning model

o if the value of the performance indicator predicted with the first value for the selected configuration parameter exceeds a threshold, ending the test and memorizing the first value for the first configuration parameter as a best configuration value

o if said value of the performance indicator predicted with the first value for the configuration parameter does not exceed said threshold, iterating the test

- if all the plurality of values has been tested without the selected configuration parameter exceeding the threshold, memorizing a best configuration value, wherein the best configuration value is a value of the selected configuration parameter, wherein the value of the selected parameter corresponds to a highest predicted value of the performance indicator among all the predictions

In an example embodiment, a plurality of values is tested for at least one configuration parameter. In that embodiment, exploiting the machine learning model to determine a recommended value for a said configuration parameter may further comprise:

- ranking the configuration parameters based on an influence in the machine learning model to obtain a ranked list of configuration parameters, wherein the step of selecting a configuration parameter to be tested is iterated in the order of the ranked list,
- Iterating the test using combinations of values for all the configuration parameters that have been iteratively selected,
- memorizing a best configuration value, wherein the best configuration value is a combination of values of the configuration parameters already tested and the other configuration parameter, wherein the combination of values caused the threshold to be exceeded or corresponds to a highest predicted value of the performance indicator among all the predictions.

In an example embodiment, iterating the test on combinations of the configuration parameters already tested and the other configuration parameter is performed only if none of the tests performed on the configuration parameters already tested caused the threshold to be exceeded.

In an example embodiment, there are at least three configuration parameters. The first configuration parameter tested is the first configuration parameter in the ranked list of configuration parameters. If none of the tests with this configuration parameter satisfies the ending condition, i.e. causes a threshold associated with the configuration parameter to be exceeded, all combinations of the first configuration parameter and the second configuration parameter in the ranked list are tested. If none of those tests with the combinations of first and second configuration parameters satisfies the ending condition, i.e. causes the thresholds associated with the first and second configuration parameters to be exceeded, all the combinations of the first, the second and the third configuration parameters are tested. That process continues until a test satisfies the ending condition or all the configuration parameters have been tested.

Thanks to these features, the determination of the recommended value is optimized, avoiding calculating too many values of the performance indicator before determining the recommended value for the configuration parameter.

In an example embodiment, the at least one memory and computer program code may be further configured to, with the at least one processor, cause the apparatus to provide a configuration report, the said configuration report including a prediction of the value of the performance indicator and the corresponding value for the configuration parameter.

In an example embodiment, the at least one memory and computer program code may be further configured to, with the at least one processor, cause the apparatus to configure the communication network using the configuration report.

In some example embodiments, the disclosure also provides a computer-implemented method for determining a configuration for a communication network, comprising:

- Providing a machine learning model to predict a value of a performance indicator of the communication network, wherein the machine learning model is configured to predict said value of a performance indicator based on a plurality of features, wherein the features include data related to configuration parameters of the communication network, wherein the configuration parameters can be modified through a management apparatus of the communication network
- Analyzing the machine learning model to select at least one dominant feature among the features used for the prediction of the value of a performance indicator, and selecting at least one influential configuration parameter among the configuration parameters based on the dominant feature selected.

- Exploiting the machine learning model to determine a recommended value for at least one of said influential configuration parameters, wherein the recommended value for the configuration parameter improves the predicted value of the performance indicator.

In some example embodiments, such a method may further comprise one or more of the features below.

In an example embodiment, the machine learning model is configured to predict values for a plurality of performance indicators and the method further comprises a step of training the machine learning model with a multi-labeling classification method.

In an example embodiment, the method further comprises the step of providing a configuration report, the said configuration report including a prediction of the value of the performance indicator and the corresponding value for the configuration parameter.

In an example embodiment the method further comprises the step of configuring the communication network using the configuration report.

In example embodiments, the disclosure also provides a computer program comprising executable code that causes a computer to perform the steps of such method when executed.

In some example embodiments, the disclosure also provides an apparatus comprising:

- A machine learning circuitry configured to implement a machine learning model to predict a value of a performance indicator of the communication network, wherein the machine learning model is configured to predict said value of a performance indicator based on a plurality of features, wherein the features include data related to configuration parameters of the communication network, wherein the configuration parameters can be modified through a management apparatus of the communication network
- An analyzing circuitry configured to analyze the machine learning model to select at least one dominant feature among the features used for the prediction of the value of a performance indicator, and selecting at least one influential configuration parameter among the configuration parameters based on the dominant feature selected.
- An exploitation circuitry configured to use the machine learning model to determine a recommended value for at least one of said influential configuration parameters, wherein the recommended value for the configuration parameter improves the predicted value of the performance indicator.

In an example embodiment, the machine learning model is configured to predict values for a plurality of performance indicators and the machine learning circuitry is further configured to train the machine learning model with a multi-labelling classification method.

In an example embodiment, the apparatus further comprises a reporting circuitry configured to provide a configuration report, the said configuration report including a prediction of the value of the performance indicator and the corresponding value for the configuration parameter.

In an example embodiment, the apparatus further comprises a configuring circuitry configured to configure the communication network using the configuration report.

In some example embodiments, the disclosure also provides an apparatus, e.g. an apparatus for determining a configuration of a communication system, comprising:

- Means for implementing a machine learning model to predict a value of a performance indicator of the communication network, wherein the machine learning model is configured to predict said value of a performance indicator based on a plurality of features, wherein the features include data related to configuration parameters of the communication network, wherein the configuration parameters can be modified through a management apparatus of the communication network

- Means for analyzing the machine learning model to select a dominant feature among the features used for the prediction of the value of the performance indicator, and select at least one influential configuration parameter among configuration parameters based on said dominant feature.

- Means for exploiting the machine learning model to determine a recommended value at least for said influential configuration parameter, wherein the recommended value for the configuration parameter improves the predicted value of the performance indicator.

In some example embodiments, the machine learning model is configured to predict values for a plurality of performance indicators and the apparatus further comprises means for training the machine learning model with a multi-labeling classification method.

In some example embodiments the apparatus further comprises means for providing a configuration report, the said configuration report including a prediction of the value of the performance indicator and the corresponding value for the configuration parameter.

In some example embodiments the apparatus further comprises means for configuring the communication network using the configuration report.

In some example embodiments, the means in the apparatus further comprises;

at least one processor; and
at least one memory including computer program code, the at least one memory and computer program code configured to, with the at least one processor, cause the performance of the apparatus.

In an example embodiment, an apparatus for configuring a communication network, the apparatus comprising at least one processor and at least one memory including computer program code;
the at least one memory and the computer program code configured to, with the at least one processor, cause the apparatus at least to perform:

- Implementing a machine learning model to predict a value of a performance indicator of the communication network, wherein the machine learning model is configured to predict said value of a performance indicator based on a plurality of features, wherein the features include data related to configuration parameters of the communication network, wherein the configuration parameters can be modified through a management apparatus of the communication network
- Analyzing the machine learning model to select a dominant feature among the features used for the prediction of the value of the performance indicator, and select at least one influential configuration parameter among configuration parameters based on said dominant feature.
- Exploiting the machine learning model to determine a recommended value for at least one of said influential configuration parameters, wherein the recommended value for the configuration parameter improves the predicted value of the performance indicator.

In an example embodiment, a non-transitory computer readable medium comprising program instructions for causing an apparatus to perform at least the following:

- Implementing a machine learning model to predict a value of a performance indicator of the communication network, wherein the machine learning model is configured to predict said value of a performance indicator based on a plurality of features, wherein the features include data related to configuration parameters of the communication network, wherein the configuration parameters can be modified through a management apparatus of the communication network
- Analyzing the machine learning model to select a dominant feature among the features used for the prediction of the value of the performance indicator, and select at least one influential configuration parameter among configuration parameters based on said dominant feature.
- Exploiting the machine learning model to determine a recommended value for at least one of said influential configuration parameters, wherein the recommended value for the configuration parameter improves the predicted value of the performance indicator.

**Brief description of the drawings**

These and other aspects of the invention will be apparent from and elucidated with reference to example embodiments described hereinafter, by way of example, with reference to the drawings.

Figure 1 is a functional representation of a cellular network alongside with apparatuses that enable to configure it and to improve its performance, in accordance with a first example embodiment.
Figure 2 is a flow chart of a process that may be implemented in the apparatuses of figure 1 to configure the network according to an example embodiment.
Figure 3 is a flow chart of a process that may be implemented in the apparatuses of figure 1 to configure the network according to an example embodiment.
Figure 4 is a flow chart representing a process that may be implemented in the apparatuses of figure 1 to optimize the recommendation of values for the configuration parameters, in accordance with an example embodiment.
Figure 5 is a graph representing a relative importance of different features in the machine learning model used for the prediction.
Figure 6 is a functional diagram of a programmed computer in which example embodiments of the invention may be implemented.

## Detailed description of the embodiments

One of the challenges faced while configuring a communication network is to be able to predict its performance and to know what configuration parameters to modify so that the configuration improves this performance. In the present disclosure, one or more performance indicators are used to characterize the performance of the communication network. It is important for engineers to be able to predict the values of those performance indicators in order to undertake actions in advance, for instance repairing a broken element in the network before it causes too much damage to the functioning of the network.

The disclosure relates to apparatuses and methods which predict the values of the performance indicators but which also recommend configuration parameter values to improve the performance of the network. Those configuration parameter values define configurations of the network. Configuration parameters are parameters that can be modified by a management apparatus of the network and whose changes can improve or deteriorate certain network functionalities. A network can have one or more configuration parameters.

In an example embodiment, configuration parameters are changed manually by the network engineers. The number of configuration parameters can exceed 2,000.

The present disclosure aims at proposing an automatic approach that recommends to the network engineers what configuration parameters they should change and with what values so that the performance indicators of the network improve. The approach is based on machine learning techniques that leverage historical data of configuration parameters and respective performance indicators. In some example embodiments, the recommendation is done by optimizing a machine learning model, going beyond a classical prediction, as the recommendations are fed into the model so that only the recommendations with high probability of improving the performance indicators are kept.

The present disclosure solves several problems like reducing operational costs, providing an automatic system to improve performance indicators, identifying best and worst configuration parameters, avoiding manual fine-tuning of parameters. It provides a fast, accurate and dynamic recommendation solution based on Machine Learning.

In some example embodiments, the communication network is a cellular network. It will be illustrated in the embodiments described herein. However, the disclosure is not limited to a cellular network.

In some example embodiments, the network is a cellular network operating in accordance with 3GPP standards and the performance indicators can be for instance the "Circuit Switched Radio Resource Control Success Rate" (CS RRC success rate) and the "Packet Switched Radio Resource Control Success Rate" (PS RRC success rate). The CS RRC success rate is calculated as:

$$\frac{number\ of\ CS\ RRC\ connections\ established}{number\ of\ CS\ RRC\ connections\ requested} \times 100$$

The Packet Switched Radio Resource Control Success Rate is calculated as:

$$\frac{number\ of\ PS\ RRC\ connections\ established}{number\ of\ PS\ RRC\ connections\ requested} \times 100$$

Those performance indicators represent two metrics used for accessibility monitoring in order to identify where the accessibility issue in the radio network is localized. Lower values (e.g. under 95%) may be interpreted as problems in radio connection establishment.

In some example embodiments, the configuration parameters are selected in the group consisting of a power offset of a communication protocol, a parameter related to handover, a parameter enabling the use of a protocol in the communication network, a value for an information used in a protocol, a maximum target for a total wide band power received in the cell with a protocol, a power allowed for transmission in a protocol, a value for a linear sum of power of channels in a cell of the cellular network, a control parameter of features of a protocol, a parameter related to a connection setup in the cellular network, a capacity for a traffic allowed for a protocol in a cell, a measurement control parameter set controlling inter-frequency measurements of a user of the network wherein the user of the network has a channel allocated, a code set for a channel

In an example embodiment, the communication network is a cellular network, e.g. operating in accordance with 3GPP standards, and the configuration parameters can have the following meanings:

- threshold for inter-frequency measurements and for the Hierarchical Cell Structure (HCS) measurement rules

- Absolute priority level for cell reselection
- Maximum transmission power level that a UE (User Equipment) can use on the PRACH (Physical Random Access Channel)
- identifying the measurement control parameter set (inter-frequency measurement control (FMCI) object) controlling inter-frequency measurements of a user having HS-DSCH allocated simultaneously with Adaptive Multi Rate (AMR) speech Circuit Switched Radio Access Bearer (CS-RAB)

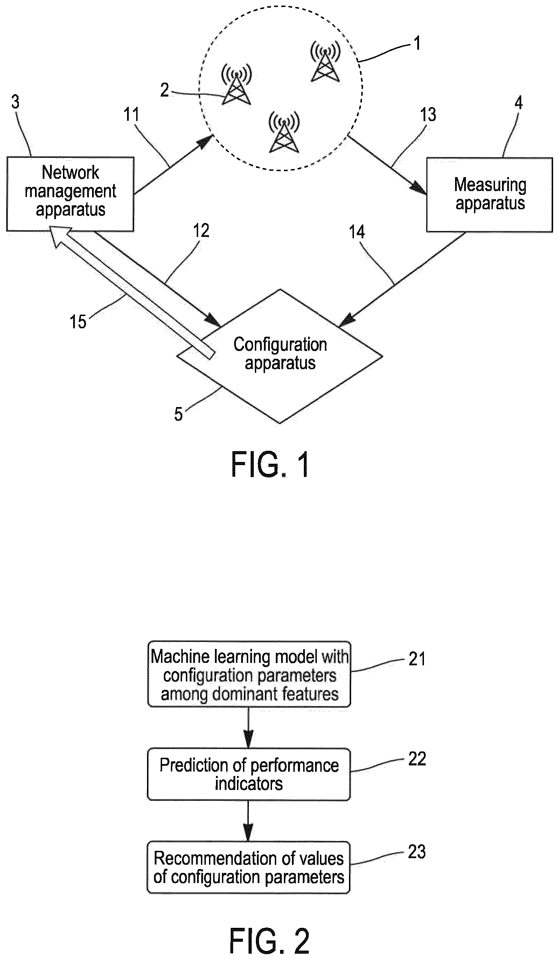

Figure 1 represents a cellular network 1 comprising several base stations 2. The network is managed through a network management apparatus 3. As used in this application, the term network management apparatus 3 may refer to material equipment, for instance a micro-computer, a work station, an Internet connected device or any other device used for communication or more general purposes. Software programs executed by this management apparatus perform management functions in order to control the network elements. In particular, the network management apparatus 3 comprises means for choosing a configuration for the cellular network 1 by choosing values for the configuration parameters of the cellular network 1. The input of those values for the configuration parameters of the cellular network 1 is represented with arrow 11. The network management apparatus 3 is also configured to provide the configuration apparatus 5 with data related to configuration parameters. The data provided by the network management apparatus 3 to the configuration apparatus 5 is represented by arrow 12.

A measuring apparatus 2 is configured to collect data related to network characteristics, which reflect the performance of the network functionalities at a given time. In an example embodiment, this data can be related to performance indicators of the network or alarms. The alarms are indicators which signal a malfunctioning of the cellular network 1. The step of collecting data is represented in figure 1 by arrow 13. The measuring apparatus 2 is further configured to provide the configuration apparatus 5 with data, as symbolized with arrow 14.

Thanks to the data related to configuration parameters and the data related to network characteristics, the configuration apparatus 5 recommends a configuration for the network, by recommending a value for each configuration parameter. The recommended value of a configuration parameter can be the same as the previous value of that parameter, the previous value of a configuration parameter being defined as the value of the configuration parameter before the configuration apparatus 5 recommended a configuration for the cellular network 1. The recommended configuration is transmitted to the network management apparatus, as represented by arrow 15.

In embodiments, the apparatus for configuring the communication network is the configuration apparatus 5 only or also comprises the network management apparatus 3 and/or the measuring apparatus 5.

As depicted in figure 2, configuring the cellular network 1 may comprise the following steps:

21: implementing a machine learning model with configuration parameters among dominant features. Dominant features are the features that have most influence on the prediction by the machine learning model. The goal is to be able to improve the performance indicators of the cellular network 1 by changing the values of the configuration parameters of cellular network 1, so the prediction needs to be based on such configuration parameters.
22: predicting the performance indicators of the cellular network 1. Thanks to this step, it is possible to know what kinds of changes are expected in the values of the configuration parameters to improve the performance of cellular network 1.
23: recommending values for configuration parameters of cellular network 1

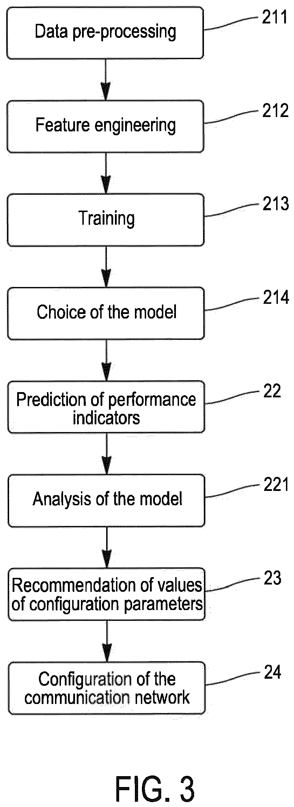

Figure 3 depicts a more detailed way to perform the process of figure 2, according to an example embodiment.

The first step is data pre-processing, represented by step 211. In an example embodiment, the data used to elaborate the machine learning model for predicting a configuration for the cellular network 1 is daily data about the performance indicators of cellular network 1, the configuration parameters, and the alarms that occur or are set in cellular network 1. The data is separated into different features, accordingly to what it represents. In an embodiment, the data is aggregated daily data. In an example embodiment, this data is used to represent the performance indicators over time as degraded or not degraded. As the dataset can be quite large, it may also include missing values. In an example embodiment, missing values have been filled in with mean, median, latest-value, minimum or maximum value per feature, a decision taken based on the nature and semantics of the feature.

After data pre-processing 211, there is a feature engineering step, represented on figure 3 by step 212. In the present disclosure, feature engineering consists in testing the influence of different features on the performance of cellular network 1 in order to determine which ones are dominant, i.e. which ones are influential in the prediction of the values of the performance indicators. The aim of the feature engineering step 212 is both generating an accurate model for the prediction of the values of the performance indicators and generating a model based on configuration parameters features, as the model needs to be able to predict the value of performance indicators according to values for the configuration parameters. There can be various features tested. In an example embodiment, the features are related to configuration parameters, performance indicators and alarms. The features related to configuration parameters may comprise the previous value of a configuration parameter, the last time lag since a configuration parameter changed (which is the number of days since the configuration parameter was changed to its current value) and the last time lag since a configuration parameter had a specific different value (which is the number of days since the last time the configuration parameter took a specific value different from its current value).

The features related to performance indicators of the cellular network 1 may comprise the value of a performance indicator at a previous time (for example, yesterday's value of a performance indicator), the last day a performance indicator had a value considered as not satisfying, and the last day a performance indicator had a value considered as satisfying. A threshold may be set to define the value of a performance indicator as satisfying if it exceeds that threshold, and to define it as unsatisfying otherwise. In some example embodiments, the features related to performance indicators may also include counters. Given a predefined number of days $x$, with $2 \leq x \leq 30$, the counters can be chosen in a group consisting of the weighted average of the values of the performance indicators for $x$ days, the standard deviation of performance indicators for around $x$ days, counting for each day, the trend deviation of performance indicators for around $x$ days, counting per day, and the percentage of performance indicators that was good within the last $x$ days, counting per day. The features related to alarms may include the number of occurrences that have happened per alarm within $x$ days or the last time lag an alarm has occurred within $x$ days.

In an example embodiment, the data related to network characteristics also includes data related to neighboring cells of a cell in the cellular network. This data may include the number of neighboring cells of this cell in the cellular network or the distance of its nearest neighbors. This data is interesting to consider because neighboring cells can mutually influence their performance. Indeed, the performance of an antenna changes when there is another antenna nearby, which can occur in case of neighboring cells, considering the antennas of two different cells. Besides, the presence of an antenna in a neighboring cell can guarantee a better functioning for the cellular network 1, because if an antenna does not work very well, a neighboring antenna may cover or partially cover its cell.

The feature engineering step 212 enables to identify the features which influence the prediction, also called dominant features. The dominant features identified need to include features related to configuration parameters. Such dominant features are hard to obtain because the most influential features are usually related to previous values of performance indicators. The dominant features for the machine learning model that will be used in the prediction of the recommended configuration are chosen after making various tests, reducing the features related to performance indicators because they are too dominant, while keeping some of them that are necessary for the prediction. The features chosen in the end are the ones for which the model shows a high prediction accuracy, while at the same time they are not too dominant compared to the features related to configuration parameters. In an example embodiment, the dominant features chosen are features related to configuration parameters (previous value of a configuration parameter, last time lag since a configuration parameter changed and last time lag since a configuration parameter had a different value) and features related to neighbors of a cell in the cellular network 1 (number of neighbors within a range and minimum distance among neighbors).

After some dominant features have been identified thanks to the feature engineering step 212, the apparatus is further configured to implement several machine learning models based on all or part of those features. The machine learning models are trained during the training step 213. In an example embodiment, a multi-label learning task is performed, with the objective of predicting the performance of several performance indicators simultaneously. In an example embodiment, the OnevsRestClassifier algorithm is used to fit one classifier per class. According to the embodiment, various functional machine learning models can be generated after this training step 213, mainly tree-based ones, like decision tree, random forest, and XGBoost. The last-mentioned model achieved an average precision of 84% and an average recall of 95%.

In an example embodiment, after generating different machine learning models to predict values for the performance indicators of the cellular network 1 based on configuration parameters, only one machine learning model is chosen to perform the configuration recommendation step. The choice of the machine learning model is represented at step 214. A metric is used to determine the best machine learning model. In an example embodiment, this metric is the F1 score, used in the machine learning community.

The following step is the analysis of the model 221. After the model has been generated, it is analyzed to determine which ones of the features chosen are dominant features. A dominant feature is a feature that influences the prediction more than other features used for the prediction. That means that it is highly probable that the value of the performance indicator will change if the values of the data that is represented by a dominant feature changes. Among the dominant features identified, there is data related to configuration parameters, because the models were all construed with the aim of having features related to configuration parameters as dominant features. Machine learning techniques may be used to perform such analysis of the model 221. In an example embodiment, the analysis may be performed thanks to criteria to estimate feature importance. In an example embodiment, such criteria are taken from the scikit-learn library. In an example embodiment, such a criterion is the "Gini importance". Some of the dominant features are selected. This enables to directly recommend configuration values for the configuration parameters related to those features, which ensures that the recommended values for the configuration parameters will have an influence on the performance indicators, because those configuration parameters are related to dominant features in the prediction of the values of performance indicators.

The recommendation step follows, with recommendation of values for configuration parameters 23.

Finally, the communication network is configured accordingly to the recommended configuration, which is represented at step 24.

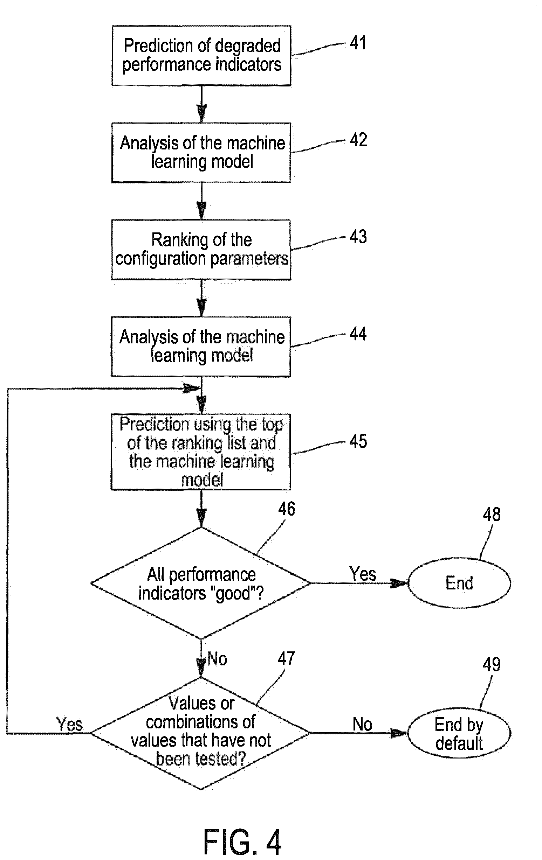

In an example embodiment, the recommendation of values of configuration parameters 23 is optimized, as depicted in figure 4. The idea is to try values for configuration parameters, considering them individually after having prioritized them based on their importance in the model.

In the disclosure, the approach is based on providing recommendations of the configuration parameters values that worked the most in the past for certain cell IDs. The cell IDs are unique numbers that identify each base transceiver station (BTS) or a sector of the BTS. The recommendation system receives the data of today with the same data context and data features and will predict the cell IDs for which there is a probability of decrease to at least one of the KPIs in the network. The Recommendation System considers only the faulty cells, as described previously.

The recommendation approach for a faulty cell is as follows:

- Initially, the model is used in order to predict the degraded performance indicators, during a step 41 of predicting the degraded performance indicators. The model has been created after the feature engineering step and the Machine Learning step. It takes the features as inputs and it gives as an output an indication of whether the KPIs will be good or bad. For example, the indication can be that from 8 pre-selected KPIs, only 2 will degrade.
- An analysis of the machine learning model 42 reveals the importance of the features used for the prediction.
- The apparatus for configuring the cellular network 1 ranks the configuration parameters based on an influence in the machine learning model to obtain a ranked list of configuration parameters. Each configuration parameter has a number of possible values. The ranking step is represented by block 43 of the flow chart in figure 4.
- The apparatus performs a simulation step in order to determine a configuration of the cellular network 1 which improves the degraded performance indicators identified at the prediction of degraded performance indicators step 41. This simulation step consists in one or more tests, which are performed until a satisfying configuration is found. The first step of a test is a prediction using the top parameter of the ranked list and the machine learning model, as represented in block 45 of the flow chart. The apparatus predicts values for the performance indicators by testing the values for the first configuration parameter in the ranked list, giving those values as input to the machine learning model. For each value, the apparatus performs two tests.
- The first test is the quality of configuration test 46 in the flow chart: if, with a given value, the performance indicators are predicted as "good", then the test ends (step 48) and the configuration parameter value tested is returned as a recommended configuration. The performance indicators may be defined as "good" if their values exceed one or more predefined thresholds. If, with this prediction, there are performance indicators which remain "bad", the second test is performed.
- The second test is the number of values test 47 in the flow chart, which consists in looking if there are values or combination of values of the configuration parameters in the ranked list that have not been tested.
- If so, step 45 and the test or tests (the number of values test 47 is performed depending on the output of the quality of configuration test 46) that follow step 45 are performed again, with values that have not been tested yet. The values are tested in the following order. First, all values for the first configuration parameter in the ranked list are tested. If none of them makes the performance indicators "good", all combination values for the first and second configuration parameters are tested, and so on. For example, if there are 3 different values for the first configuration parameter and 2 for the second, the next step after testing the three values for the first parameter is to test all 6 combinations of the two configuration parameters.
- If no values to test remain and none of the configurations tested led to "good" values for the performance indicators, the process ends. This corresponds to end by default step 49. This means that all possible configurations (within the values to be tested) have been tested without giving a satisfying result for the values of the performance indicators. In that case, the recommended configuration corresponds to the configuration that has the highest probability of improving the values of the performance indicators. This configuration corresponds to the configuration that led to the best values for the performance indicators (even though those values may not all be "good").

In an embodiment, the configuration corresponding to the best values of performance indicators can be identified because a provisional best configuration is memorized at each iteration of the quality of configuration test 46. The memorization process works as following. The first time the quality of configuration test 46 is negative, meaning that the prediction did not led to only "good" values for the performance indicators, the configuration tested is memorized. Then, every time the quality of configuration test 46 produces a negative result, the values obtained for the performance indicators with the tested configurations are compared to the previous memorized value, and only the value leading to the best values of performance indicators is kept in memory among both values. The value kept in memory at each iteration of the quality of configuration test 46 corresponds to the provisional best configuration. When the end by default step 49 occurs, the recommended value is the last provisional best configuration memorized.

This process optimizes the determination of the recommended value, avoiding calculating too many values of the performance indicators before determining the recommended value for the configuration parameters.

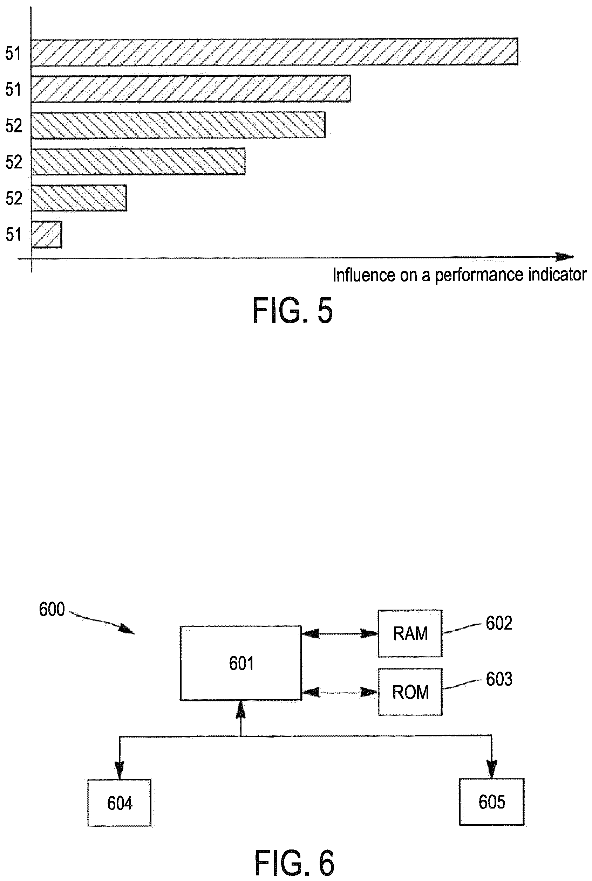

Figure 5 represents the relative importance of different features in the machine learning model, according to an example embodiment. There are two groups of features: network-related features 51 and configuration-parameter-related features 52. As depicted in figure 5, the most influential features on the prediction are some of the network-related features 51, e.g. features related to the performance indicators. However, three configuration-parameter-related features are also important in the prediction and can therefore be considered as dominant features. Therefore, in that embodiment, dominant features include network-related features 51, configuration-parameter-related features 52, which enable the prediction to be based on the values of configuration parameters. The fact that there are configuration-parameter-related features 52 among dominant features is enough to ensure that the prediction of the values of the performance indicators will rely on the values of some configuration parameters. The presence of network-related features 51 improves the quality of the prediction. Indeed, the prediction is more accurate if there are network-related features 51 among dominant features than if there are only configuration-parameter-related features among dominant features.

Figure 6 shows a functional diagram of a programmed computer, server, circuitry, or apparatus 600 that may be used for that purpose. Computer 600 has a core and several peripherals connected via a communication bus. The major components of the core are a microprocessor 601 (often called the CPU) random access memory (RAM) 602 and read only memory (ROM) 603. The peripherals comprise devices that allow information to be input to the system from users, output to users and stored and retrieved (mass storage devices 604 such as hard disks and network interfaces 605).

The invention is not limited to the described example embodiments. The appended claims are to be construed as embodying all modifications and alternative constructions that may occur to one skilled in the art, and which fairly fall within the basic teaching as set forth herein.

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Elements such as the apparatus and its components could be or include e.g. hardware means like e.g. an Application-Specific Integrated Circuit (ASIC), or a combination of hardware and software means, e.g. an ASIC and a Field-Programmable Gate Array (FPGA), or at least one microprocessor and at least one memory with software modules located therein, e.g. a programmed computer.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The example embodiments may be implemented by means of hardware as well as software. The same item of hardware may represent several "means".

In the claims, any reference signs placed between parentheses shall not be construed as limiting the scope of the claims.

**Claims**

1. An apparatus (5) for determining a configuration for a communication network (1), the apparatus comprising means for:

- Implementing a machine learning model (21) to predict a value of a performance indicator (22) of the communication network, wherein the machine learning model is configured to predict said value of a performance indicator based on a plurality of features, wherein the features include data related to configuration parameters of the communication network (52), wherein the configuration parameters can be modified through a management apparatus of the communication network (3)
- Analyzing (221) the machine learning model to select a dominant feature among said plurality of features and select an influential configuration parameter among said configuration parameters based on said dominant feature,
- Exploiting the machine learning model to determine a recommended value for at least the said influential configuration parameter (23), wherein the recommended value for the influential configuration parameter improves the predicted value of the performance indicator.

2. The apparatus of claim 1, wherein the data related to configuration parameters includes data selected in the group consisting of a time lag since a latest time a configuration parameter was changed, a latest different value of a configuration parameter, and a time lag since a latest time a configuration parameter had a different value.

3. The apparatus of any one of claims 1 or 2, wherein the communication network is a cellular network and wherein the configuration parameters are selected in the group consisting of a power offset of a communication protocol, a parameter related to handover, a parameter enabling the use of a protocol in the communication network, a value for an information used in a protocol, a maximum target for a total wide band power received in the cell with a protocol, a power allowed for transmission in a protocol, a value for a linear sum of power of channels in a cell of the cellular network, a control parameter of features of a protocol, a parameter related to a connection setup in the cellular network, a capacity for a traffic allowed for a protocol in a cell, a measurement control parameter set controlling inter-frequency measurements of a user of the network wherein the user of the network has a channel allocated, a code set for a channel

4. The apparatus of any one of claims 1 to 3, wherein the features further include data related to network characteristics (51), the said network characteristics reflecting the efficiency or the organization of the network at a given time.

5. The apparatus of claim 4, wherein the communication network is a cellular network and the data related to network characteristics includes data selected in the group consisting of data related to alarms, data related to counters, data related to neighboring cells of a cell in the cellular network, and data related to previous values of the said performance indicator.

6. The apparatus of any one of claims 1 to 5, wherein the machine learning model is configured to predict the performance indicator value as degraded or not degraded.

7. The apparatus of any one of claims 1 to 6, wherein machine learning model is configured to predict values for a plurality of performance indicators, and wherein the means are further configured to train (213) the machine learning model with a multi-labeling classification method.

8. The apparatus of claim 7 wherein the step of analyzing the machine learning model to select a dominant feature among said features is performed with a machine learning method selected within the scikit-learn library.

9. The apparatus of any one of claims 1 to 8 wherein exploiting the machine learning model to determine a recommended value for a said configuration parameter further comprises:

- selecting a configuration parameter to be tested
- selecting a plurality of values for the selected configuration parameter
- iterating a test for the selected configuration parameter until the test ends or all the plurality of values have been tested, wherein a said test includes:

  o selecting a first value for the configuration parameter among the plurality of values, wherein the first value has not been tested yet
  o predicting a first value (45) for the performance indicator using the first value for the configuration parameter as input for the machine learning model

o if the first value of the performance indicator exceeds a threshold, ending the test (48) and memorizing the first value for the first configuration parameter as a best configuration value
o if said first value of the performance indicator does not exceed said threshold, iterating the test

- if all the plurality of values has been tested without the selected configuration parameter exceeding the threshold, memorizing a best configuration value, wherein the best configuration value is a value of the selected configuration parameter that corresponds to a highest predicted value of the performance indicator among all the predictions.

10. The apparatus of claim 9, wherein exploiting the machine learning model to determine a recommended value for a said configuration parameter further comprises:

- Ranking (43) the configuration parameters based on an influence in the machine learning model to obtain a ranked list of configuration parameters, wherein the step of selecting a configuration parameter to be tested is iterated in the order of the ranked list,
- Iterating the test using combinations of values for all the configuration parameters that have been iteratively selected,
- Memorizing a best configuration value, wherein the best configuration value is a combination of values of the configuration parameter already tested and the other configuration parameter, wherein the combination of values caused the end of the test or corresponds to a highest predicted value of the performance indicator among all the predictions.

11. The apparatus of any one of claims 1 to 10, wherein the means are further configured to provide a configuration report (23), the said configuration report including a prediction of the value of the performance indicator and the corresponding value for the configuration parameter.

12. The apparatus of claim 11, wherein the means are further configured to configure (24) the communication network using the configuration report.

13. A computer-implemented method for determining a configuration for a communication network, the method including:

- Providing a machine learning model to predict a value of a performance indicator of the communication network, wherein the machine learning model is configured to predict said value of a performance indicator based on a plurality of features, wherein the features include data related to configuration parameters of the communication network, wherein the configuration parameters can be modified through a management apparatus of the communication network
- Analyzing the machine learning model to select a dominant feature among said features and select an influential configuration parameter among said configuration parameters based on said dominant feature
- Exploiting the machine learning model to determine a recommended value for a said influential configuration parameter, wherein the recommended value for the influential configuration parameter improves the predicted value of the performance indicator.

14. A method according to claim 13, wherein the method further comprises the step of providing a configuration report, the said configuration report including a prediction of the value of the performance indicator and the corresponding value for the configuration parameter.

15. A method according to claim 14, wherein the method further comprises the step of configuring the communication network using the configuration report.

16. A computer program comprising executable code which when executed by at least one processor of an apparatus causes the apparatus to perform at least the following:

- Implementing a machine learning model to predict a value of a performance indicator of the communication network, wherein the machine learning model is configured to predict said value of a performance indicator based on a plurality of features, wherein the features include data related to configuration parameters of the communication network, wherein the configuration parameters can be modified through a management apparatus of the communication network
- Analyzing the machine learning model to select a dominant feature among said features and select an influential configuration parameter among said configuration parameters based on said dominant feature
- Exploiting the machine learning model to determine a recommended value for a said influential configuration parameter, wherein the recommended value for the influential configuration parameter improves the predicted value of the performance indicator.

**Patentansprüche**

1. Vorrichtung (5) zum Bestimmen einer Konfiguration für ein Kommunikationsnetz (1), wobei die Vorrichtung Mittel umfasst zum:

   - Implementieren eines Modells für maschinelles Lernen (21), um einen Wert eines Leistungsindikators (22) des Kommunikationsnetzes vorherzusagen, wobei das Modell für maschinelles Lernen dafür konfiguriert ist, den Wert eines Leistungsindikators basierend auf einer Vielzahl von Merkmalen vorherzusagen, wobei die Merkmale Daten beinhalten, die sich auf Konfigurationsparameter des Kommunikationsnetzes (52) beziehen, wobei die Konfigurationsparameter durch eine Verwaltungsvorrichtung des Kommunikationsnetzes (3) modifiziert werden können,
   - Analysieren (221) des Modells für maschinelles Lernen, um ein dominantes Merkmal aus der Vielzahl von Merkmalen auszuwählen und auf der Grundlage des dominanten Merkmals einen einflussreichen Konfigurationsparameter aus den Konfigurationsparametern auszuwählen,
   - Nutzen des Modells für maschinelles Lernen, um einen empfohlenen Wert für zumindest den einflussreichen Konfigurationsparameter (23) zu bestimmen, wobei der empfohlene Wert für den einflussreichen Konfigurationsparameter den vorhergesagten Wert des Leistungsindikators verbessert.

2. Vorrichtung nach Anspruch 1, wobei die Daten, die sich auf Konfigurationsparameter beziehen, Daten enthalten, die ausgewählt sind aus der Gruppe bestehend aus einer Zeitverzögerung seit einem letzten Zeitpunkt, zu dem ein Konfigurationsparameter geändert wurde, einem letzten anderen Wert eines Konfigurationsparameters und einer Zeitverzögerung seit einem letzten Zeitpunkt, zu dem ein Konfigurationsparameter einen anderen Wert hatte.

3. Vorrichtung nach einem der Ansprüche 1 oder 2, wobei das Kommunikationsnetz ein Mobilfunknetz ist und wobei die Konfigurationsparameter ausgewählt sind aus der Gruppe bestehend aus einem Leistungsversatz eines Kommunikationsprotokolls, einem Parameter, der sich auf das Handover bezieht, einem Parameter, der die Verwendung eines Protokolls in dem Kommunikationsnetz ermöglicht, einem Wert für eine in einem Protokoll verwendete Information, einem maximalen Zielwert für eine gesamte Breitbandleistung, die in der Zelle mit einem Protokoll empfangen wird, einer Leistung, die zur Übertragung in einem Protokoll zugelassen ist, einem Wert für eine lineare Summe der Leistung von Kanälen in einer Zelle des Mobilfunknetzes, einem Steuerparameter von Merkmalen eines Protokolls, einem Parameter, der sich auf einen Verbindungsaufbau in dem Mobilfunknetz bezieht, einer Kapazität für einen Datenverkehr, der für ein Protokoll in einer Zelle zugelassen ist, einem Messsteuerparametersatz, der Zwischenfrequenzmessungen eines Nutzers des Netzes steuert, wobei dem Nutzer des Netzes ein Kanal zugewiesen ist, einem Codeset für einen Kanal.

4. Vorrichtung nach einem der Ansprüche 1 bis 3, wobei die Merkmale weiter Daten umfassen, die sich auf Netzmerkmale (51) beziehen, wobei die Netzmerkmale die Effizienz oder die Organisation des Netzes zu einem gegebenen Zeitpunkt widerspiegeln.

5. Vorrichtung nach Anspruch 4, wobei das Kommunikationsnetz ein Mobilfunknetz ist und die Daten, die sich auf Netzmerkmale beziehen, Daten beinhalten, die ausgewählt sind aus der Gruppe bestehend aus Daten, die sich auf Alarme beziehen, Daten, die sich auf Zähler beziehen, Daten, die sich auf benachbarte Zellen einer Zelle in dem Mobilfunknetz beziehen, und Daten, die sich auf frühere Werte des Leistungsindikators beziehen.

6. Vorrichtung nach einem der Ansprüche 1 bis 5, wobei das Modell für maschinelles Lernen dafür konfiguriert ist, den Leistungsindikatorwert als verschlechtert oder nicht verschlechtert vorherzusagen.

7. Vorrichtung nach einem der Ansprüche 1 bis 6, wobei das Modell für maschinelles Lernen dafür konfiguriert ist, Werte für eine Vielzahl von Leistungsindikatoren vorherzusagen, und wobei die Mittel weiter dafür konfiguriert sind, das Modell für maschinelles Lernen mit einem Verfahren der Multi-Label-Klassifizierung zu trainieren (213).

8. Vorrichtung nach Anspruch 7, wobei der Schritt des Analysierens des Modells für maschinelles Lernen, um ein dominantes Merkmal unter den Merkmalen auszuwählen, mit einem maschinellen Lernverfahren durchgeführt wird, das in der Scikit-Learn-Bibliothek ausgewählt wird.

9. Vorrichtung nach einem der Ansprüche 1 bis 8, wobei das Nutzen des Modells für maschinelles Lernen zum Bestimmen eines empfohlenen Werts für den Konfigurationsparameter weiter Folgendes umfasst:

- Auswählen eines zu testenden Konfigurationsparameters,
- Auswählen einer Vielzahl von Werten für den ausgewählten Konfigurationsparameter,
- Wiederholen eines Tests für den ausgewählten Konfigurationsparameter, bis der Test endet oder alle der Vielzahl von Werten getestet wurden, wobei ein Test Folgendes beinhaltet:

o Auswählen eines ersten Werts für den Konfigurationsparameter aus der Vielzahl von Werten, wobei der erste Wert noch nicht getestet wurde,
o Vorhersagen eines ersten Werts (45) für den Leistungsindikator unter Verwendung des ersten Werts für den Konfigurationsparameter als Eingabe für das Modell für maschinelles Lernen,
o wenn der erste Wert des Leistungsindikators einen Schwellenwert überschreitet, Beenden des Tests (48) und Speichern des ersten Werts für den ersten Konfigurationsparameter als besten Konfigurationswert,
o wenn der erste Wert des Leistungsindikators den Schwellenwert nicht überschreitet, Wiederholen des Tests,

- wenn alle der Vielzahl von Werten getestet wurden, ohne dass der ausgewählte Konfigurationsparameter den Schwellenwert überschreitet, Speichern eines besten Konfigurationswerts, wobei der beste Konfigurationswert ein Wert des ausgewählten Konfigurationsparameters ist, der einem höchsten vorhergesagten Wert des Leistungsindikators unter allen Vorhersagen entspricht.

10. Vorrichtung nach Anspruch 9, wobei das Nutzen des Modells für maschinelles Lernen zum Bestimmen eines empfohlenen Werts für den Konfigurationsparameter weiter Folgendes umfasst:

- Sortieren (43) der Konfigurationsparameter auf der Grundlage eines Einflusses in dem Modell für maschinelles Lernen, um eine sortierte Liste von Konfigurationsparametern zu erhalten, wobei der Schritt des Auswählens eines zu testenden Konfigurationsparameters in der Reihenfolge der sortierten Liste wiederholt wird,
- Wiederholen des Tests unter Verwendung von Kombinationen von Werten für alle Konfigurationsparameter, die iterativ ausgewählt wurden,
- Speichern eines besten Konfigurationswerts, wobei der beste Konfigurationswert eine Kombination von Werten des bereits getesteten Konfigurationsparameters und des anderen Konfigurationsparameters ist, wobei die Kombination von Werten das Ende des Tests verursacht hat oder einem höchsten vorhergesagten Wert des Leistungsindikators unter allen Vorhersagen entspricht.

11. Vorrichtung nach einem der Ansprüche 1 bis 10, wobei die Mittel weiter dafür konfiguriert sind, einen Konfigurationsbericht (23) bereitzustellen, wobei der Konfigurationsbericht eine Vorhersage des Wertes des Leistungsindikators und des entsprechenden Wertes für den Konfigurationsparameter enthält.

12. Vorrichtung nach Anspruch 11, wobei die Mittel weiter dafür konfiguriert sind, das Kommunikationsnetz unter Verwendung des Konfigurationsberichts zu konfigurieren (24).

13. Computerimplementiertes Verfahren zum Bestimmen einer Konfiguration für ein Kommunikationsnetz, wobei das Verfahren Folgendes umfasst:

- Bereitstellen eines Modells für maschinelles Lernen, um einen Wert eines Leistungsindikators des Kommunikationsnetzes vorherzusagen, wobei das Modell für maschinelles Lernen dafür konfiguriert ist, den Wert eines Leistungsindikators basierend auf einer Vielzahl von Merkmalen vorherzusagen, wobei die Merkmale Daten beinhalten, die sich auf Konfigurationsparameter des Kommunikationsnetzes beziehen, wobei die Konfigurationsparameter durch eine Verwaltungsvorrichtung des Kommunikationsnetzes modifiziert werden können,
- Analysieren des Modells für maschinelles Lernen, um ein dominantes Merkmal aus den Merkmalen auszuwählen und auf der Grundlage des dominanten Merkmals einen einflussreichen Konfigurationsparameter aus den Konfigurationsparametern auszuwählen,
- Nutzen des Modells für maschinelles Lernen, um einen empfohlenen Wert für zumindest den einflussreichen Konfigurationsparameter zu bestimmen, wobei der empfohlene Wert für den einflussreichen Konfigurationsparameter den vorhergesagten Wert des Leistungsindikators verbessert.

14. Verfahren nach Anspruch 13, wobei das Verfahren weiter den Schritt des Bereitstellens eines Konfigurationsberichts umfasst, wobei der Konfigurationsbericht eine Vorhersage des Wertes des Leistungsindikators und des entsprechenden Wertes für den Konfigurationsparameter enthält.

15. Verfahren nach Anspruch 14, wobei das Verfahren weiter den Schritt des Konfigurierens des Kommunikationsnetzes unter Verwendung des Konfigurationsberichts umfasst.

16. Computerprogramm, das ausführbaren Code umfasst, der bei Ausführung durch mindestens einen Prozessor einer Vorrichtung die Vorrichtung veranlasst, mindestens Folgendes auszuführen:

- Implementieren eines Modells für maschinelles Lernen, um einen Wert eines Leistungsindikators des Kommunikationsnetzes vorherzusagen, wobei das Modell für maschinelles Lernen dafür konfiguriert ist, den Wert eines Leistungsindikators basierend auf einer Vielzahl von Merkmalen vorherzusagen, wobei die Merkmale Daten beinhalten, die sich auf Konfigurationsparameter des Kommunikationsnetzes beziehen, wobei die Konfigurationsparameter durch eine Verwaltungsvorrichtung des Kommunikationsnetzes modifiziert werden können,
- Analysieren des Modells für maschinelles Lernen, um ein dominantes Merkmal aus den Merkmalen auszuwählen und auf der Grundlage des dominanten Merkmals einen einflussreichen Konfigurationsparameter aus den Konfigurationsparametern auszuwählen,
- Nutzen des Modells für maschinelles Lernen, um einen empfohlenen Wert für zumindest den einflussreichen Konfigurationsparameter zu bestimmen, wobei der empfohlene Wert für den einflussreichen Konfigurationsparameter den vorhergesagten Wert des Leistungsindikators verbessert.

**Revendications**

1. Appareil (5) pour la détermination d'une configuration pour un réseau de communication (1), l'appareil comprenant des moyens pour :

- mettre en œuvre un modèle d'apprentissage machine (21) pour prédire une valeur d'un indicateur de performance (22) du réseau de communication, dans lequel le modèle d'apprentissage machine est configuré pour prédire ladite valeur d'un indicateur de performance sur la base d'une pluralité de particularités, dans lequel les particularités incluent des données se rapportant à des paramètres de configuration du réseau de communication (52), dans lequel les paramètres de configuration peuvent être modifiés par le biais d'un appareil de gestion du réseau de communication (3)
- analyser (221) le modèle d'apprentissage machine pour sélectionner une particularité dominante parmi ladite pluralité de particularités et sélectionner un paramètre de configuration influent parmi lesdits paramètres de configuration sur la base de ladite particularité dominante,
- exploiter le modèle d'apprentissage machine pour déterminer une valeur recommandée pour au moins ledit paramètre de configuration influent (23), dans lequel la valeur recommandée pour le paramètre de configuration influent améliore la valeur prédite de l'indicateur de performance.

2. Appareil selon la revendication 1, dans lequel les données se rapportant à des paramètres de configuration incluent des données sélectionnées parmi le groupe constitué d'un retard depuis une dernière occurrence à laquelle un paramètre de configuration a été modifié, d'une dernière valeur différente d'un paramètre de configuration, et d'un retard depuis une dernière occurrence à laquelle un paramètre de configuration avait une valeur différente.

3. Appareil selon l'une quelconque des revendications 1 ou 2, dans lequel le réseau de communication est un réseau cellulaire et dans lequel les paramètres de configuration sont sélectionnés parmi le groupe constitué d'un écart de puissance d'un protocole de communication, d'un paramètre se rapportant à un transfert intercellulaire, d'un paramètre permettant l'utilisation d'un protocole dans le réseau de communication, d'une valeur pour une information utilisée dans un protocole, d'une cible maximale pour une puissance à large bande totale reçue dans la cellule avec un protocole, d'une puissance autorisée pour une émission dans un protocole, d'une valeur pour une somme linéaire de puissance de canaux dans une cellule du réseau cellulaire, d'un paramètre de commande de particularités d'un protocole, d'un paramètre se rapportant à une configuration de connexion dans le réseau cellulaire, d'une capacité pour un trafic autorisé pour un protocole dans une cellule, d'un ensemble de paramètres de commande de mesure commandant des mesures entre fréquences d'un utilisateur du réseau dans lequel un canal est alloué à l'utilisateur du réseau, d'un ensemble de codes pour un canal.

4. Appareil selon l'une quelconque des revendications 1 à 3, dans lequel les particularités incluent en outre des données se rapportant à des caractéristiques de réseau (51), lesdites caractéristiques de réseau reflétant l'efficacité ou l'organisation du réseau à un instant donné.

5. Appareil selon la revendication 4, dans lequel le réseau de communication est un réseau cellulaire et les données se rapportant à des caractéristiques de réseau incluent des données sélectionnées parmi le groupe constitué de données se rapportant à des alarmes, de données se rapportant à des compteurs, de données se rapportant à des cellules voisines d'une cellule dans le réseau cellulaire, et de données se rapportant à des valeurs précédentes dudit indicateur de performance.

6. Appareil selon l'une quelconque des revendications 1 à 5, dans lequel le modèle d'apprentissage machine est configuré pour prédire que la valeur d'indicateur de performance est dégradée ou non dégradée.

7. Appareil selon l'une quelconque des revendications 1 à 6, dans lequel le modèle d'apprentissage machine est configuré pour prédire des valeurs pour une pluralité d'indicateurs de performance, et dans lequel les moyens sont en outre configurés pour entraîner (213) le modèle d'apprentissage machine avec un procédé de classification à étiquetage multiple.

8. Appareil selon la revendication 7 dans lequel l'étape d'analyse du modèle d'apprentissage machine pour sélectionner une particularité dominante parmi lesdites particularités est réalisée avec un procédé d'apprentissage machine sélectionné au sein de la bibliothèque scikit-learn.

9. Appareil selon l'une quelconque des revendications 1 à 8 dans lequel l'exploitation du modèle d'apprentissage machine pour déterminer une valeur recommandée pour un dit paramètre de configuration comprend en outre :

   - la sélection d'un paramètre de configuration devant être testé
   - la sélection d'une pluralité de valeurs pour le paramètre de configuration sélectionné
   - l'itération d'un test pour le paramètre de configuration sélectionné jusqu'à ce que le test s'achève ou jusqu'à ce que la totalité de la pluralité de valeurs aient été testées, dans lequel un dit test inclut :

      o la sélection d'une première valeur pour le paramètre de configuration parmi la pluralité de valeurs, dans lequel la première valeur n'a pas encore été testée
      o la prédiction d'une première valeur (45) pour l'indicateur de performance à l'aide de la première valeur pour le paramètre de configuration en tant qu'entrée pour le modèle d'apprentissage machine
      o si la première valeur de l'indicateur de performance dépasse un seuil, l'achèvement du test (48) et la mémorisation de la première valeur pour le premier paramètre de configuration en tant que meilleure valeur de configuration
      o si ladite première valeur de l'indicateur de performance ne dépasse pas ledit seuil, l'itération du test

   - si la totalité de la pluralité de valeurs ont été testées sans que le paramètre de configuration sélectionné ne dépasse le seuil, la mémorisation d'une meilleure valeur de configuration, dans lequel la meilleure valeur de configuration est une valeur du paramètre de configuration sélectionné qui correspond à une valeur prédite la plus élevée de l'indicateur de performance parmi toutes les prédictions.

10. Appareil selon la revendication 9, dans lequel l'exploitation du modèle d'apprentissage machine pour déterminer une valeur recommandée pour un dit paramètre de configuration comprend en outre :

   - la hiérarchisation (43) des paramètres de configuration sur la base d'une influence dans le modèle d'apprentissage machine pour obtenir une liste hiérarchisée de paramètres de configuration, dans lequel l'étape de sélection d'un paramètre de configuration devant être testé est itérée dans l'ordre de la liste hiérarchisée,
   - l'itération du test à l'aide de combinaisons de valeurs pour la totalité des paramètres de configuration qui ont été sélectionnés de manière itérative,
   - la mémorisation d'une meilleure valeur de configuration, dans lequel la meilleure valeur de configuration est une combinaison de valeurs du paramètre de configuration déjà testé et de l'autre paramètre de configuration, dans lequel la combinaison de valeurs a provoqué l'achèvement du test ou correspond à une valeur prédite la plus élevée de l'indicateur de performance parmi toutes les prédictions.

11. Appareil selon l'une quelconque des revendications 1 à 10, dans lequel les moyens sont en outre configurés pour fournir un rapport de configuration (23), ledit rapport de configuration incluant une prédiction de la valeur de l'indicateur de performance et de la valeur correspondante pour le paramètre de configuration.

12. Appareil selon la revendication 11, dans lequel les moyens sont en outre configurés pour configurer (24) le réseau de communication à l'aide du rapport de configuration.

13. Procédé mis en œuvre par ordinateur pour la détermination d'une configuration pour un réseau de communication, le procédé incluant :

- la fourniture d'un modèle d'apprentissage machine pour prédire une valeur d'un indicateur de performance du réseau de communication, dans lequel le modèle d'apprentissage machine est configuré pour prédire ladite valeur d'un indicateur de performance sur la base d'une pluralité de particularités, dans lequel les particularités incluent des données se rapportant à des paramètres de configuration du réseau de communication, dans lequel les paramètres de configuration peuvent être modifiés par le biais d'un appareil de gestion du réseau de communication

- l'analyse du modèle d'apprentissage machine pour sélectionner une particularité dominante parmi lesdites particularités et sélectionner un paramètre de configuration influent parmi lesdits paramètres de configuration sur la base de ladite particularité dominante

- l'exploitation du modèle d'apprentissage machine pour déterminer une valeur recommandée pour un dit paramètre de configuration influent, dans lequel la valeur recommandée pour le paramètre de configuration influent améliore la valeur prédite de l'indicateur de performance.

14. Procédé selon la revendication 13, dans lequel le procédé comprend en outre l'étape de la fourniture d'un rapport de configuration, ledit rapport de configuration incluant une prédiction de la valeur de l'indicateur de performance et de la valeur correspondante pour le paramètre de configuration.

15. Procédé selon la revendication 14, dans lequel le procédé comprend en outre l'étape de la configuration du réseau de communication à l'aide du rapport de configuration.

16. Programme d'ordinateur comprenant un code exécutable qui, lors de son exécution par au moins un processeur d'un appareil, amène l'appareil à réaliser au moins ce qui suit :

- la mise en œuvre d'un modèle d'apprentissage machine pour prédire une valeur d'un indicateur de performance du réseau de communication, dans lequel le modèle d'apprentissage machine est configuré pour prédire ladite valeur d'un indicateur de performance sur la base d'une pluralité de particularités, dans lequel les particularités incluent des données se rapportant à des paramètres de configuration du réseau de communication, dans lequel les paramètres de configuration peuvent être modifiés par le biais d'un appareil de gestion du réseau de communication

- l'analyse du modèle d'apprentissage machine pour sélectionner une particularité dominante parmi lesdites particularités et sélectionner un paramètre de configuration influent parmi lesdits paramètres de configuration sur la base de ladite particularité dominante

- l'exploitation du modèle d'apprentissage machine pour déterminer une valeur recommandée pour un dit paramètre de configuration influent, dans lequel la valeur recommandée pour le paramètre de configuration influent améliore la valeur prédite de l'indicateur de performance.

FIG. 1

FIG. 2

FIG. 3

Prediction of degraded performance indicators — 41

Analysis of the machine learning model — 42

Ranking of the configuration parameters — 43

Analysis of the machine learning model — 44

Prediction using the top of the ranking list and the machine learning model — 45

46 — All performance indicators "good"?

Yes → End — 48

No — 47 — Values or combinations of values that have not been tested?

Yes

No → End by default — 49

FIG. 4

FIG. 5

Influence on a performance indicator

FIG. 6